# DEMANDE DE BREVET EUROPEEN

(11) **EP 4 429 128 A1**
(43) Date de publication de la demande: **11.09.2024**
(21) Numéro de dépôt: 24162492.3
(22) Date de dépôt: 08.03.2024
(51) Int. Cl.: H04B 10/118, H04B 10/70, H04B 7/185

(54) **METHODE D'ETABLISSEMENT D'UN CANAL QUANTIQUE PAR SATELLITE, SATELLITE POUR ETABLISSEMENT DE CANAL QUANTIQUE ET METHODE D'EMISSION DE REQUETE D'ETABLISSEMENT D'UN CANAL QUANTIQUE**

(30) Priorité: 09.03.2023 FR 2302173
(71) Demandeur: THALES, 92190 Meudon (FR)
(72) Inventeur: GAYRARD, Jean-Didier, 31270 CUGNAUX (FR)
(74) Mandataire: Atout PI Laplace

(57) **Abrégé**

Un objet de l'invention est une méthode de distribution de clé secrète par canal quantique via un satellite (et une architecture associée) dans laquelle la planification de la distribution est effectuée en temps réel par le satellite lui-même et par les stations terrestre de communication quantique, sans l'intervention d'un centre de contrôle de mission externe aux stations. Le satellite est autonome et fait lui-même la gestion de ses ressources. Dans cette architecture, le satellite acquiert de façon autonome et indépendante du centre de contrôle de mission au sol les informations nécessaires à la planification de sa mission.

## Description

### Domaine technique :

La présente invention concerne le domaine de la sécurité des technologies de l'information et plus particulièrement le domaine de la distribution de clé secrète par canal quantique via satellite. Ce domaine s'intitule en anglais Satellite-Based Quantum Key Distribution (QKD). Ce domaine est un sous-domaine du domaine des satellites de communication quantique.

### Technique antérieure :

La communication quantique par satellite repose sur la transmission de qubits entre un satellite en général émetteur et une ou deux stations terrestres de communication quantique généralement réceptrices. Un qubit (ou qbit) est l'information quantique transportée par un photon. Cette information est par exemple l'état de polarisation du photon.

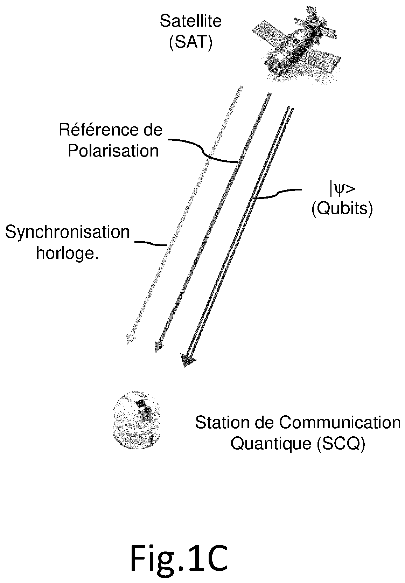

Une communication quantique consiste à établir un canal de communication quantique ou canal quantique entre un émetteur (le satellite) et un récepteur (une station terrestre). Le canal quantique est constitué d'une liaison optique en espace libre transmettant une suite de photons polarisés (qubit). Le canal quantique peut contenir également des liaisons optiques de servitude : une liaison de synchronisation et d'horloge pour assurer la synchronisation de l'émetteur et du récepteur et pour identifier temporellement chaque photon polarisé, une liaison optique de référence de polarisation pour aligner les référentiels (axes) de polarisation de l'émetteur et du récepteur. La figure 1C illustre de façon schématique un canal quantique entre un satellite et une station terrestre de communication quantique, la liaison (|Ψ>) est la liaison optique en espace libre transmettant les qubits.

La distribution quantique de clé (QKD pour l'anglais quantum key distribution) est un protocole cryptographique visant à établir un secret partagé entre deux participants (Alice et Bob) permettant de générer une clé cryptographique commune. Cette clé sert ensuite aux participants à chiffrer leurs communications au moyen d'un algorithme de chiffrement symétrique. La distribution quantique de clé par satellite utilise un ou des canaux quantiques pour transmettre des séquences aléatoires de qubit entre le satellite et des stations terrestres.

Il y a deux protocoles de distribution quantique de clé: le protocole de préparation et mesure (P&M) et le protocole d'intrication quantique (EB).

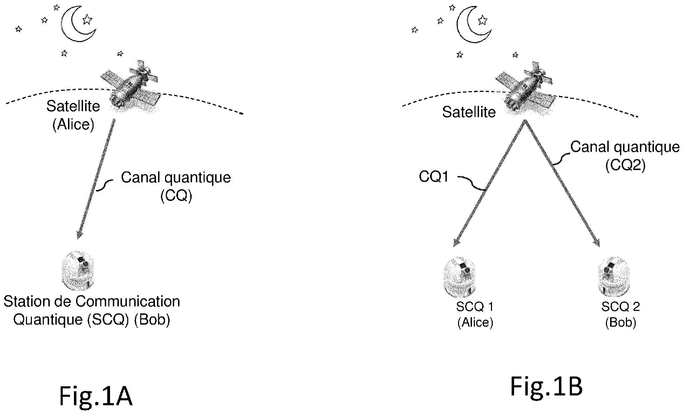

Dans le protocole de préparation et mesure (P&M), l'émetteur (Alice ou le satellite) prépare un photon en fixant son état de polarisation et le transmet. Le récepteur (Bob ou la station terrestre) effectue la mesure de l'état du photon. L'émetteur (Alice ou le satellite) transmet une suite aléatoire de qubits au récepteur (Bob ou la station terrestre). Du fait du protocole, des détériorations de la liaison optique, des bruits parasites, de la présence éventuelle d'un espion, la séquence détectée par Bob est incomplète, lacunaire et contient des erreurs. Un processus de réconciliation permet à Alice et Bob de se mettre d'accord sur une séquence commune qui servira à générer la clé secrète. La figure 1A illustre schématiquement la mise en oeuvre du protocole Préparation et Mesure entre le satellite (Alice) et une station terrestre de communication quantique (Bob) reliés par un canal quantique (CQ). L'échange de clés secrètes entre le satellite et la station terrestre nécessite un seul canal quantique. La liaison de communication pour la réconciliation entre le satellite et la station terrestre n'est pas représentée.

Dans le protocole d'intrication quantique (EB), un émetteur tiers (le satellite) émet des paires de photons intriqués et polarisés vers deux stations terrestres (Alice et Bob), un photon de la paire de photons intriqués vers chaque station. La propriété d'intrication conduit à ce qu'Alice et Bob mesurent le même état de polarisation sur chaque photon reçu d'une paire de photons émis. La mesure aléatoire des paires de photons intriqués par Alice et Bob permet de générer un séquence aléatoire commune. Les dégradations des deux liaisons optiques entre le satellite et les deux stations, les bruits parasites, la présence éventuelle d'un espion altèrent la séquence aléatoire partagée par Alice et Bob. Un processus de réconciliation permet de définir une séquence commune et de générer la clé secrète. La figure 1B illustre schématiquement la mise en oeuvre du protocole d'intrication entre la station terrestre de communication quantique SCQ1 (Alice) et la station terrestre SCQ2 (Bob). Le satellite est le tiers émetteur des paires de photons intriqués qu'il transmet aux stations terrestres SCQ1 (Alice) et SCQ2 (Bob) par deux canaux quantiques (CQ1 & CQ2). L'échange de clés secrètes entre les deux stations nécessite deux canaux quantiques établis avec le satellite. La liaison de communication pour la réconciliation entre les deux stations terrestres n'est pas représentée. Par exemple, cette liaison de réconciliation est une liaison terrestre entre les deux stations ou une liaison satellitaire via le satellite.

Un système satellitaire de distribution de clés secrètes est un infrastructure de communication quantique comprenant un ou plusieurs satellites en orbite autour de la terre (LEO, MEO, GEO), un ensemble de stations terrestres de communication quantique réparties autour du globe aptes à établir des canaux quantiques avec le ou les satellites pour échanger des séquences aléatoires de qubits sous la forme de photons polarisés, et un segment de contrôle de la mission. Le segment de contrôle inclut un centre de contrôle de mission, un centre de contrôle des satellites et un réseau de stations de télécommande/télémesure (TM/TC). Ce système assure ainsi un service de distribution de clés secrètes, selon un protocole de préparation et mesure et/ou un protocole d'intrication.

Le problème est de définir la planification de la mission de chaque satellite, c'est-à-dire de définir dans quelles conditions un satellite en visibilité de plusieurs stations terrestres de communication quantique doit-il choisir une ou deux stations terrestres avec la ou lesquelles il établira un canal quantique. A chaque instant, il y a plusieurs stations terrestres de communication quantique en visibilité optique de chaque satellite. Un satellite est équipé d'un ou plusieurs terminaux optiques aptes à établir un canal quantique avec une ou plusieurs stations terrestres de communication quantique. Un canal quantique est une liaison optique point à point en espace libre, ainsi un terminal optique d'un satellite ne peut établir qu'un seul canal quantique avec une seule station terrestre.

De plus, les liaisons optiques quantiques sont bloquées par les nuages. Aussi, une station terrestre de communication quantique qui est sous une couverture nuageuse ne peut établir un canal quantique avec un satellite. Selon les techniques utilisées pour opérer le canal quantique, d'autres conditions sont à prendre en compte : niveau des turbulences atmosphériques au-dessus de la station, opération nocturne uniquement, présence d'aérosols...

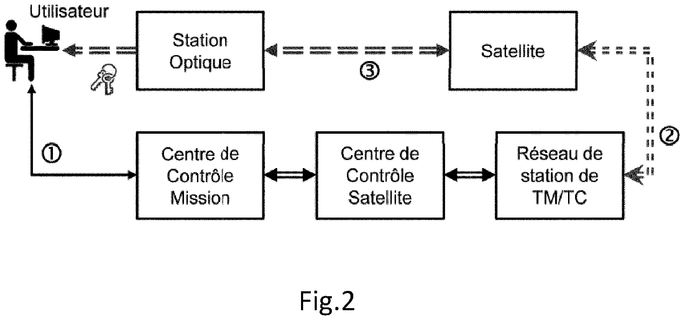

La figure 2 illustre schématiquement l'architecture d'un système satellitaire de distribution de clés secrètes via satellite connu de l'art antérieur. Ce système comprend le segment spatial constitué par les satellites, le segment utilisateur rassemblant toutes les stations terrestres de communication quantique, et le segment de contrôle. Le segment de contrôle est en charge de la gestion et du contrôle du système et de sa mission. Il inclut un centre de contrôle de mission, un centre de contrôle des satellites et un réseau de station de télémesures et télécommandes (TM/TC) avec les liaisons associées.

Le centre de contrôle de mission élabore la mission des satellites, c'est-à-dire la planification de l'utilisation des ressources du satellite. Une ressource est un canal quantique qui sera établi pour un certain temps avec une station terrestre. Le canal quantique permet de fournir le service de distribution de clés.

Cette planification de l'affectation des canaux quantiques aux stations terrestres est faite en fonction :
- des demandes (date et durée) d'établissement de canaux quantiques avec les stations pour fournir le service de distribution de clés,
- des accords de niveau de service des stations,
- de la matrice de distribution des clés, c'est-à-dire pour chaque station terrestre la liste des autres stations terrestres avec lesquelles ladite station échange des clés,
- des conditions météorologiques au-dessus de chaque station,
- de la position du satellite sur l'orbite permettant de calculer les dates et les durées des visibilités de chaque station.

Le centre de contrôle satellite élabore le plan de mission des satellites en fonction de la planification donnée par le centre de contrôle de mission et des exigences propres au système et aux satellites. Le réseau de stations de TM/TC transmet le plan de mission à chaque satellite par un canal de télécommande/télémesure.

Cette architecture exige l'existence de plusieurs liaisons entre les différents éléments du système.

Un canal quantique 3 est nécessaire entre chaque station terrestre de communication quantique et le satellite pour l'échange de clés secrètes. De plus, une liaison 1 entre la station terrestre et le centre de contrôle de mission est requise pour échanger des informations par exemple : le besoin en nombre et durée d'établissements du canal quantique 3, la date butée pour l'établissement du canal quantique, les prévisions des conditions météorologiques au-dessus de la station. Cependant, cette liaison 1 est critique du point de vue de la sécurité. Une attaque de cette liaison pourrait permettre d'usurper l'identité d'une ou des stations et de pouvoir obtenir l'établissement d'un canal quantique avec une station pirate pour par exemple soit obtenir des clés secrètes soit injecter de fausses clés. Alternativement, une attaque pourrait simplement provoquer un déni de service : en cas de perte de cette liaison la ou les stations concernées ne peuvent plus obtenir l'établissement d'un canal quantique.

Enfin, l'architecture de la figure 2 requiert l'utilisation d'une liaison 2 de TM/TC pour programmer ou reprogrammer la mission du ou des satellite(s). Les performances du système de distribution de clés dépendent grandement du délai de transmission à chaque satellite de son plan de mission élaboré par le planificateur du centre de contrôle de mission.

Pour être optimale, la planification doit être faite en temps quasi réel afin de tenir compte des évolutions de la couverture nuageuse au-dessus des stations. Ainsi le planificateur doit connaitre les probabilités d'éclaircies ou de passages nuageux au-dessus des stations pour élaborer le meilleur plan de mission. Ce plan de mission doit être transmis au satellite via le centre de contrôle satellite et le réseau de stations de TM/TC de façon quasi continue.

Ainsi, la liaison de TM/TC doit être permanente afin de reprogrammer en temps réel les satellites pour réagir aux évolutions des conditions météo. Or, en dehors du cas des satellites en orbite GEO, il est difficile et très couteux de garantir une couverture mondiale permanente des signaux de TM/TC. Cela nécessite selon l'altitude des orbites (MEO, LEO) un réseau mondial plus ou moins dense de stations de TM/TC à relier au centre de contrôle satellite.

L'invention vise à pallier certains problèmes de l'art antérieur. A cet effet, un objet de l'invention est une méthode de distribution de clé secrète par canal quantique via un satellite (et une architecture associée) dans laquelle la planification du nombre et de la durée d'établissement de canaux quantiques avec les stations terrestres est effectuée en temps réel par le satellite lui-même et par les stations terrestres, sans l'intervention d'un centre de contrôle de mission externe aux stations terrestres. Le satellite est autonome et fait lui-même la gestion de ses ressources. Dans cette architecture, le satellite acquiert de façon autonome et indépendante du centre de contrôle de mission au sol les informations nécessaires à la planification de sa mission.

En évitant la multiplication des liaisons de TM/TC pour programmer ou reprogrammer la mission du satellite et des liaisons entre les stations terrestres et le centre de contrôle de mission, l'architecture de l'invention présente une sécurité améliorée, une simplicité accrue et un cout réduit par rapport à l'art antérieur.

### Résumé de l'invention :

A cet effet, un objet de l'invention est une méthode d'établissement d'un canal de communication quantique par un satellite, le satellite comprenant une unité de traitement dans laquelle sont stockées des données associées à une pluralité de stations de communication quantique comprenant une position desdites stations terrestres de communication quantique, ladite méthode comprenant les étapes suivantes mises en oeuvre par l'unité de traitement :
A. Déterminer une position du satellite puis déterminer une zone d'établissement de canal quantique du satellite à partir de ladite position du satellite,
B. A partir de ladite position desdites stations terrestres de communication quantique, déterminer un sous ensemble de stations terrestres de communication quantique formé par au moins une des stations terrestres de communication quantique comprise dans ladite zone d'établissement de canal quantique
C. Identifier au moins une des stations terrestres de communication quantique, dite station visible :
   - comprise dans ledit sous ensemble,
   - ayant émis une requête d'établissement de canal quantique, et
   - qui est en visibilité optique du satellite,
D. Avec lesdites données, sélectionner au moins une station visible, dite station sélectionnée, avec laquelle établir un canal quantique, puis
E. Etablir un canal quantique entre ledit satellite et la ou les stations sélectionnées.

Selon un mode de réalisation, lorsqu'il existe un nombre de station(s) visible(s) supérieur à un nombre *N* ≥ 1 de canaux quantiques disponibles sur le satellite, l'étape D comprend une sous étape de classement par priorité desdites requêtes d'établissement d'un canal quantique en fonction d'informations comprises dans lesdites données, lesdites informations étant choisies parmi la liste suivante : un recueil chronologique des établissements d'un canal quantique précédemment établies avec les stations, un accord préalable d'établissement d'un canal quantique avec les stations et des consignes émises par le centre de contrôle de mission, ladite sélection de la ou des stations sélectionnées consistant à choisir la ou les N stations visibles ayant émis une requête d'établissement d'un canal quantique présentant une priorité classée parmi les N premières. De manière préférentielle, lesdites informations comprennent une durée de visibilité optique des stations visibles calculée par l'unité de traitement à partir de ladite position desdites stations, de ladite position du satellite et d'une prévision d'une trajectoire du satellite.

Selon un mode de réalisation, l'étape C comprend :
- détecter un signal laser dit signal de visibilité optique émis par au moins une station terrestre de communication quantique comprise dans ledit sous ensemble, puis
- identifier cette ou ces stations terrestre(s) de communication quantique comme station(s) visible(s).

Selon un mode de réalisation, préalablement à l'étape C, une des stations terrestres de communication quantique transmet une requête d'établissement d'un canal quantique vers un centre de contrôle de mission puis ledit centre de contrôle de mission transmet ladite requête au satellite, et dans laquelle lesdites données comprennent ladite requête, l'étape C comprenant l'identification de cette station terrestre de communication quantique comme station visible lorsqu'elle est en visibilité optique du satellite.

Selon un mode de réalisation la méthode comprend une étape ultérieure F consistant à transmettre à un centre de contrôle de mission, par un canal de télécommande-télémesure du satellite, un signal représentatif du nombre et des durées d'établissement d'un canal quantique et représentatif de la station terrestre de communication quantique avec laquelle chaque canal quantique a été établi.

Selon un mode de réalisation, l'étape A est répétée jusqu'à ce que ledit sous ensemble de stations terrestres de communication quantique soit déterminé en étape B, et dans laquelle, les étapes A et B sont répétées jusqu'à ce que la ou les stations visibles soient identifiées dans l'étape C, et dans laquelle, les étapes A, B et C sont répétées jusqu'à ce que la ou les stations sélectionnées soient sélectionnées dans l'étape D.

Selon un mode de réalisation, l'étape E consiste à échanger, par canal quantique via ledit satellite, au moins une clé secrète avec la ou les stations sélectionnées.

Alternativement, selon un autre mode de réalisation, l'étape E consiste à établir, via ledit satellite, au moins une clé secrète partagée par au moins deux stations sélectionnées.

Une autre objet de l'invention est une méthode d'émission de requête d'établissement d'un canal quantique mise en oeuvre par un module de traitement d'une station terrestre de communication quantique comprenant un terminal quantique apte à établir un canal quantique avec le satellite, ladite méthode comprenant les étapes suivantes :
I. Identifier un besoin d'établissement d'un canal quantique à partir de paramètres stockés dans ledit module de traitement, lesdits paramètres comprenant un accord préalable d'établissement d'un canal quantique à ladite station terrestre de communication quantique, un recueil chronologique du nombre et durées d'établissement d'un canal quantique précédemment établie avec la station et un nombre et durées d'établissement de canal quantique attribué à ladite station,
II. Si un besoin est identifié, identifier un satellite présentant une position dans laquelle il est apte à établir un canal quantique avec ladite station terrestre de communication quantique, puis déterminer une prévision d'une trajectoire dudit satellite depuis ladite position,
III. A partir de données météorologiques et à partir de ladite prévision de la trajectoire, déterminer une fenêtre temporelle de visibilité optique durant laquelle un d'établissement d'un canal quantique entre ledit satellite et ladite station est possible,
IV. Emettre une requête d'établissement d'un canal quantique transmise directement ou indirectement audit satellite.

Selon un mode de réalisation de la méthode d'émission de requête d'établissement d'un canal quantique, la requête de d'établissement d'un canal quantique est transmise directement audit satellite, ladite requête étant alors un signal laser dit signal de visibilité optique émis par ladite station.

Selon un mode de réalisation de la méthode d'émission de requête d'établissement d'un canal quantique, les données météorologiques comprennent des relevés météorologiques locaux à la station terrestre de communication quantique et des prévisions météorologiques locales à la station terrestre de communication quantique pour une durée comprise entre 1 minute et 15 minutes.

Un autre objet de l'invention est un satellite apte à établir un canal quantique, ledit satellite comprenant :
- au moins un terminal quantique de satellite adapté pour établir un canal optique avec une station terrestre de communication quantique,
- un déterminateur et propagateur d'orbite adapté pour déterminer une position du satellite,
- une unité de traitement dans laquelle sont stockées des données associées à une pluralité de stations terrestre de communication quantique, lesdites données comprenant une position desdites stations ladite unité de traitement étant reliée au déterminateur et propagateur d'orbite et adaptée pour mettre en oeuvre les étapes suivantes :
   A. déterminer une zone d'établissement de canal quantique du satellite à partir de ladite position du satellite déterminée par le déterminateur et propagateur d'orbite
   B. à partir de ladite position desdites stations, déterminer un sous ensemble de stations terrestre de communication quantique formé par au moins une des stations terrestre de communication quantique comprise dans ladite zone d'établissement de canal quantique du satellite
   C. Identifier au moins une station terrestre de communication quantique, dite station visible :
      - comprise dans ledit sous ensemble,
      - ayant émis une requête d'établissement de canal quantique, et
      - qui est en visibilité optique du satellite,
   D. établir un canal quantique entre ledit satellite et la ou les stations sélectionnées au moyen d'un terminal quantique de satellite.

Selon un mode de réalisation, le satellite comprend un dispositif optique de détection relié à l'unité de traitement, et adapté pour que l'étape C comprenne les sous étapes suivantes :
- détecter, par ledit dispositif optique de détection, un signal laser dit signal de visibilité optique émis par au moins une station terrestre de communication quantique comprise dans ledit sous ensemble, puis
- identifier cette ou ces stations terrestres de communication quantique comme station(s) visible(s).

Un autre objet de l'invention est une station de communication comprenant :
- un terminal quantique apte à établir un canal quantique avec le satellite,
- un module de propagation d'orbite adapté à déterminer les positions et les trajectoires du ou des satellites à partir de données d'orbitographie du ou des satellites,
- un module de traitement adapté pour recevoir ou déterminer des données météorologiques locales et adapté pour mettre en oeuvre les étapes suivantes :
   I. Identifier un besoin d'établissement de canal quantique à partir de paramètres stockés dans ledit module de traitement, lesdits paramètres comprenant un accord préalable d'établissement d'un canal quantique avec ladite station et un recueil chronologique du nombre et des durées d'établissement d'un canal quantique avec ladite station,
   II. Si un besoin est identifié, identifier un satellite présentant une position dans laquelle il est apte à établir un canal quantique avec ladite station, puis déterminer une prévision d'une trajectoire dudit satellite depuis ladite position,
   III. A partir desdites données météorologiques et à partir de ladite prévision de la trajectoire, déterminer une fenêtre temporelle de visibilité optique dudit satellite durant laquelle un établissement de canal quantique entre ledit satellite et ladite station de communication est possible,
   IV. Emettre une requête d'établissement de canal quantique transmise directement ou indirectement audit satellite.

Selon un mode de réalisation, la requête d'établissement de canal quantique est transmise directement audit satellite, ladite requête étant alors un signal laser dit signal de visibilité optique émis ledit terminal quantique.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1A] une vue schématique d'un dispositif de mise en oeuvre d'un canal quantique optique entre un satellite et une station terrestre de communication quantique pour distribution ou échange quantique de clés par satellite (QKD) selon l'art antérieur et mettant en oeuvre un protocole de type Préparation et Mesure,
[Fig.1B], une vue schématique d'un dispositif de mise en oeuvre de deux canaux quantiques optiques entre un satellite et deux stations terrestres de communication quantique pour distribution ou échange quantique de clés par satellite (QKD) selon l'art antérieur et mettant en oeuvre un protocole par intrication.
[Fig.1C], une vue schématique de la mise en oeuvre d'un canal quantique optique entre un satellite et une station terrestre de communication quantique
[Fig.2], une vue schématique d'une architecture de génération de clé par noeud de confiance de l'art antérieur,
[Fig.3A], une vue schématique d'une méthode de distribution de clés secrètes sûres selon l'invention,
[Fig.3B], une vue schématique d'un système de distribution de clés secrètes selon l'invention,
[Fig.3C], une vue schématique d'un système de distribution de clés secrètes selon un mode de réalisation de l'invention
[Fig.3D], une vue schématique d'un système de distribution de clés secrètes selon un mode de réalisation de l'invention
[Fig.4], une vue schématique d'une méthode de distribution de clés selon un mode de réalisation préféré de la méthode de l'invention
[Fig.5], une vue schématique d'une méthode d'émission de requête d'établissement'un canal quantique selon l'invention
Dans les figures, sauf contre-indication, les éléments ne sont pas à l'échelle et les références identiques désignent des éléments identiques.

### Description détaillée :

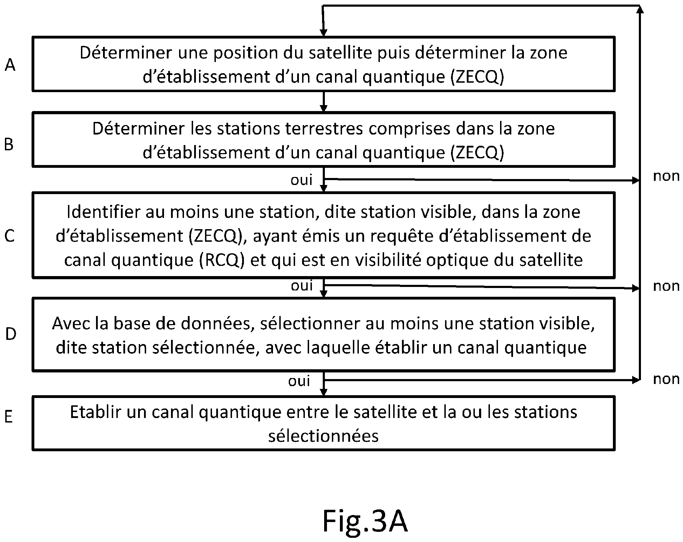

La figure 3A illustre schématiquement une méthode de distribution de clé secrète par canal quantique via un satellite Sat selon un mode de réalisation de l'invention.

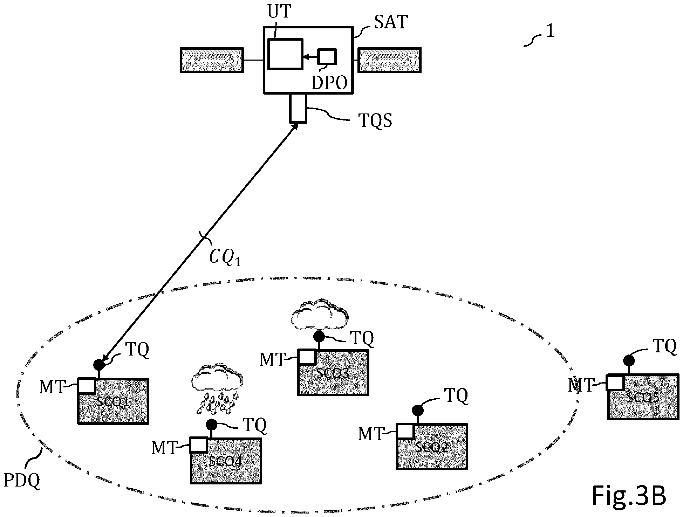

La figure 3B illustre schématiquement un système de communication 1 selon l'invention qui comprend le satellite Sat et des stations terrestres de communications quantiques SCQ1-SCQ5 terrestres.

Il est important de noter que la méthode de l'invention s'applique à l'établissement d'un canal quantique pour la distribution de clés secrètes par tout protocole connu de l'homme de l'art. Par exemple, selon un mode de réalisation, l'invention est mise en oeuvre avec un protocole d'échange de clés secrètes par canal quantique de type *Préparation et Mesure* (Préparation and measure P&M en anglais) dans lequel le satellite distribue directement une clé secrète à une unique station terrestre de communication quantique. Alternativement, selon un autre mode de réalisation, l'invention est mise en oeuvre avec un protocole d'établissement de clés secrètes par canal quantique basé sur l'intrication quantique (ES en anglais pour *Entaglement Based*)*.* Dans ce mode de réalisation, le satellite envoie à deux stations terrestres de communication quantique des paires de photons intriqués (un à chaque station), par un canal quantique respectif. Ainsi, ces deux stations partagent une même clé secrète.

Dans la suite de la description, sauf lorsque cela est explicitement spécifié, on décrira la méthode de l'invention mise en oeuvre avec un protocole d'échange de clé secrète par canal quantique de type préparation et mesure (P&M) afin de simplifier la description de l'invention. Cependant, l'homme de l'art comprendra que la méthode de l'invention (et le satellite adapté pour mettre en oeuvre cette méthode) peut être généralisée à tout protocole de distribution par canal connu de l'homme de l'art.

Ainsi, les stations terrestres de communications quantiques SCQ1-SCQ5 sont toutes aptes à établir un canal quantique avec le satellite Sat par le biais de leur terminal quantique TQ. Le canal quantique permet d'échanger des qubits afin par exemple d'échanger des clés secrètes. Alternativement, le terminal quantique TQ permet l'établissement, via le satellite Sat, d'au moins une clé secrète partagée par deux stations terrestres de communication quantique, sous la forme d'une paire de photons intriqués. Le terminal quantique TQ comprend les éléments nécessaires à l'établissement d'un canal quantique pour échanger des clés sécrètes selon un protocole donné comme par exemple le protocole BB84 (Bennett et Brassard 1984). Le terminal TQ comprend un télescope, un système de pointage et de poursuite du télescope vers le télescope du satellite Sat, un dispositif d'émission et de réception des signaux optiques de communications quantiques et un dispositif de contrôle de protocole pour échanger des clés secrètes.

A titre d'exemple non limitatif, la figure 3B illustre un mode de réalisation dans lequel le système 1 comprend cinq stations terrestres de communications quantiques SCQ1-SCQ5. Alternativement, selon un autre mode de réalisation, le système 1 comprend un nombre de stations de communications différent de cinq.

Le satellite Sat comprend au moins un terminal quantique satellite TQS qui comprend les éléments nécessaires à l'établissement d'un canal quantique avec une station terrestre de communication quantique. De plus, il comprend une unité de traitement UT adaptée pour mettre en oeuvre la méthode de la figure 3A. Dans cette unité de traitement UT sont stockées des données associées aux stations terrestres de communication quantiques SCQ1-SCQ5 qui comprennent notamment une position géographique desdites stations SCQ1-SCQ5, un recueil chronologique du nombre et de la durée d'établissements d'un canal quantique avec lesdites stations SCQ1-SCQ5 permettant d'estimer le volume de clés secrètes précédemment reçues par les stations, les accords préalables de niveau de service des stations, et éventuellement des consignes spécifiques liées aux stations. Par « accord préalable de niveau de service de la station », on entend ici un accord qui engage le gestionnaire du système 1 à établir des canaux quantiques entre le ou les satellites et la station à une fréquence et une durée prédéterminées afin de distribuer des clés secrètes à une fréquence et/ou un volume prédéterminés.

En outre, il comprend un déterminateur et propagateur d'orbite DPO adapté pour déterminer une position du ou des satellites Sat en temps réel dans un repère prédéterminé et pour prédire les futures positions du ou des satellites. Par exemple, le déterminateur et propagateur d'orbite DPO peut comprendre un récepteur GNSS (pour Géolocalisation et Navigation par un Système de Satellites) pour mesurer la position du satellite et un propagateur d'orbite logiciel. Le propagateur d'orbite est un algorithme qui permet de prévoir la position et la vitesse future du satellite à partir d'une position initiale mesurée.

Dans une première étape A de la méthode de la figure 3A, l'unité de traitement UT détermine la position instantanée à T0 du satellite Sat par le biais du déterminateur et propagateur d'orbite DPO. Après avoir déterminé cette position, l'unité de traitement UT calcule une zone d'établissement du canal quantique ZECQ depuis la position du satellite Sat. La zone d'établissement d'un canal quantique ZECQ est une zone géographique au sol (représentée dans la figure 3B) au sein de laquelle il est possible d'établir un canal quantique entre le satellite Sat et une station terrestre de communication quantique comprise dans cette zone si les conditions météorologiques le permettent. Il s'agit donc de la zone géographique théorique où il est possible d'établir un canal quantique entre le satellite et une station terrestre de communication quantique localisée dans ladite zone géographique L'établissement du canal quantique permet d'échanger des clés secrètes.

Dans une étape B, l'unité de traitement UT détermine, à partir des positions des stations terrestres de communication quantique SCQ1-SCQ5 stockées, un sous ensemble de stations SCQ1-SCQ4 formé par au moins une des stations comprise dans la zone d'établissement d'un canal quantique ZECQ. Dans l'exemple de la figure 3B, la station terrestre de communication quantique SCQ5 n'est donc pas dans le sous ensemble car elle est trop éloignée du satellite Sat et donc hors de la zone d'établissement d'un canal quantique ZECQ.

Après cette étape B, la méthode comprend une étape C qui consiste à identifier la ou les stations terrestres de communication quantique du sous ensemble -appelées stations visibles- qui sont en visibilité optique du satellite et qui ont émis une requête RCQ d'établissement de canal quantique. Chaque requête d'établissement de canal quantique RCQ est un signal préalablement émis par une station terrestre de communication quantique respective qui est transmis directement ou indirectement au satellite Sat.

Dans l'exemple de la figure 3B, seules les stations terrestres de communication quantique SCQ1 et SCQ2 sont des stations visibles car les stations SCQ3 et SCQ4 ont des conditions météorologiques locales à l'instant T0 qui les empêchent d'établir un contact optique avec le satellite Sat. Il est donc impossible d'établir un canal quantique avec ces stations à l'instant T0, bien qu'elles soient comprises dans la zone d'établissement d'un canal quantique ZECQ.

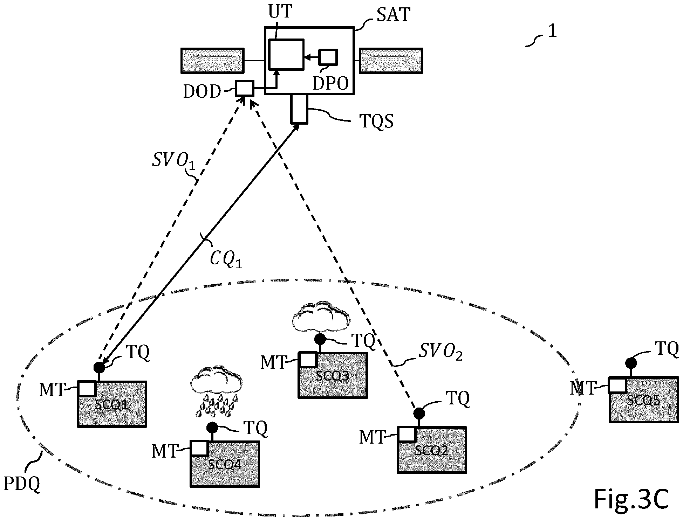

De manière préférentielle, comme illustré dans la figure 3C, le satellite Sat comprend un dispositif optique de détection DOD relié à l'unité de traitement UT. Dans ce mode de réalisation, l'étape C comprend alors une première sous étape consistant à détecter, par le dispositif optique de détection DOD, un signal laser transportant le signal de requête d'établissement de canal quantique RCQ dit signal laser de visibilité optique SVO₁, SVO₂ émis par les stations SCQ1 et SCQ2. Dans le mode de réalisation de la figure 3C, l'émission du signal laser de visibilité optique constitue la requête d'établissement de canal quantique RCQ. Dans une seconde sous étape, l'unité de traitement UT identifie les stations SCQ1 et SCQ2 comme stations visibles à partir des signaux lasers de visibilité optique SVO₁, SVO₂.

Selon un premier mode de réalisation, le dispositif optique de détection DOD est apte à détecter et à mesurer l'angle d'arrivée des signaux laser de visibilité optique SVOi émis par les stations SCQi. A partir des mesures d'angle d'arrivée, des positions géographiques des stations dans la zone d'établissement de canal quantique ZECQ, lesdites positions géographiques étant stockées dans l'unité de traitement UT et de la position actuelle du satellite fournie par le déterminateur et propagateur d'orbite DPO, l'unité de traitement UT détermine l'identité des stations visibles.

Selon un deuxième mode de réalisation, le dispositif optique de détection DOD est apte à détecter et à analyser la signature des signaux laser de visibilité optique SVOi émis par les stations SCQi. La signature d'un signal laser de visibilité optique SVOi est une caractéristique du signal optique propre à la station émettrice. Par exemple le signal laser de visibilité optique SVOi est modulé avec une modulation tout ou rien (OOK pour On-Off Keying en anglais) par un mot binaire identifiant de la station émettrice du signal laser. D'autres informations numériques à destination de l'unité de traitement UT peuvent également moduler le signal laser de visibilité optique SVO. A partir des positions géographiques des stations dans la zone d'établissement de canal quantique ZECQ stockées dans l'unité de traitement UT et des mots identifiants de station démodulés par le dispositif optique de détection DOD, l'unité de traitement UT détermine l'identité des stations visibles.

Bien évidemment, d'autres modes de réalisation de l'étape C sont possible.

De manière préférentielle, dans le mode de réalisation de la figure 3C, chaque signal laser de visibilité optique SVO est émis par le système de pointage et de poursuite du télescope du terminal quantique TQ de la station terrestre de communication quantique respective. En effet, le système de pointage et de poursuite permet d'établir et de maintenir le contact optique grâce à l'émission de balises laser. Le contact optique est nécessaire à l'établissement du canal quantique entre la station terrestre de communication quantique SCQ et le satellite Sat. La mutualisation des éléments du terminal TQ permet donc de simplifier l'architecture du système 1.

Alternativement, selon un autre mode de réalisation compatible avec le mode de réalisation de la figure 3C, une des stations terrestres de communication quantique transmet une requête d'établissement de canal quantique indirectement via le centre de contrôle de mission préalablement à l'étape C. La requête d'établissement d'un canal quantique reçue par le centre de contrôle de mission est transmise au satellite par le centre de contrôle du satellite au travers du réseau de stations de TM/TC. Dans ce mode de réalisation, les données stockées dans l'unité de traitement UT comprennent cette requête et l'information concernant la station qui l'a émise. L'étape C comprend alors l'identification de cette station de communication comme station visible lorsqu'elle est en visibilité optique du satellite. Selon un mode de réalisation, la transmission de la requête depuis le centre de contrôle de mission vers le satellite est effectuée via un canal de télécommande-télémesure du satellite. Cela permet de simplifier l'architecture du système 1 en mutualisant les canaux préexistant.

Après avoir identifié les stations visibles, la méthode comprend une étape D qui consiste à choisir parmi les stations visibles - c'est à dire les stations qui sont celles avec lesquelles il est possible d'établir un canal quantique à T0 et qui ont requis l'établissement du canal quantique- la ou les stations avec lesquelles on va effectivement établir un canal quantique.

Lorsqu'il existe un nombre de stations visibles supérieur à un nombre N >_ 1 de canaux quantiques que le satellite Sat est apte à établir, l'étape D comprend une sous étape de classement par priorité des requêtes d'établissement de canal quantique RCQ en fonction d'informations comprises dans les données. Ces informations sont choisies parmi la liste suivante : un recueil chronologique du nombre et de la durée des établissements de canal quantique avec les stations visibles, les accords préalables de niveau de service des stations visibles et des consignes spécifiques liées aux stations visibles transmisses par le centre de contrôle de mission via le réseau de stations de TM/TC. Ainsi, la sélection de la ou des stations visibles avec la ou lesquelles sera établit un canal quantique, consiste à choisir la ou les N stations visibles ayant émis une requête établissements de canal quantique (RCQ) présentant une priorité classée parmi les N premières.

Par exemple, l'unité de traitement UT compare le nombre et les durées d'établissement de canal quantique du recueil chronologique avec la fréquence et la durée d'établissement de canal quantique prédéterminées dans l'accord préalable de niveau de service. Ainsi, une station présentant un déficit du nombre et de la durée d'établissement de canal quantique plus important que celui d'une autre station sera classée avec une priorité plus élevée.

Une consigne spécifique transmise à l'unité de traitement TU du satellite par le centre de contrôle de mission est par exemple un ordre de refus de service à une station donnée suite à la possible existence d'une faille de sécurité dans ladite station ou suite à un défaut de paiement du gestionnaire d'une station terrestre de communication quantique envers le gestionnaire du système satellitaire 1. L'étape D consistera alors à ne pas sélectionner cette station.

De manière préférentielle, la sous étape de classement par priorité des requêtes d'établissement de canal quantique est aussi basée sur la durée de visibilité optique des stations visibles. Cette durée de visibilité optique est calculée par l'unité de traitement UT sans considération météorologique à partir de la position des stations terrestres de communication quantique, de la position du satellite à l'instant T0 et de la prévision de la trajectoire du satellite donnée par le déterminateur et propagateur d'orbite DPO. Par exemple, lorsque l'unité de traitement UT calcule qu'une durée de visibilité optique d'une station visible est insuffisante pour établir un canal quantique pendant une durée suffisante pour fournir un service de distribution de clé quantique satisfaisant, l'unité de traitement UT ne sélectionnera pas cette station dans l'étape D. Ce cas de durée insuffisante peut arriver lorsque la station est en bordure de la zone d'établissement de canal quantique ZECQ. A titre d'exemple non limitatif, on considère qu'une durée de visibilité inférieure à 3 min est insuffisante pour établir un canal quantique.

Dans le cas où il existe un nombre de stations visibles égal à un nombre *N* >_ 1 de canaux quantiques disponibles sur le satellite Sat, l'étape D consiste par exemple à sélectionner toutes les stations visibles. Alternativement, il est possible de ne pas sélectionner une ou plusieurs stations visibles lorsque l'unité de traitement calcule qu'une durée de visibilité optique de ces stations visibles est insuffisante pour établir un canal quantique et échanger un volume de clé satisfaisant. Par « durée de visibilité optique », on entend ici une fenêtre temporelle à partir de T0 durant laquelle la station considérée et le satellite peuvent établir un canal quantique en ne prenant en compte que des paramètres purement géométriques (position de la station, position du satellite et prévision de trajectoire du satellite) stockés dans l'unité de traitement UT. De même, il est possible de ne pas sélectionner une ou plusieurs stations visibles lorsque l'unité de traitement compare le nombre et les durées d'établissement de canal quantique du recueil chronologique avec la fréquence et la durée d'établissement de canal quantique prédéterminées dans l'accord préalable de niveau de service desdites stations et déduit que la station a obtenu un nombre et les durées d'établissement de canal quantique égal ou supérieur à ceux qui étaient prévus dans l'accord préalable.

En résumé, l'étape D est une étape d'optimisation à plusieurs variables qui vise à satisfaire au mieux l'engagement de qualité de service du gestionnaire du système satellitaire en priorisant l'établissement de canaux quantiques de manière appropriée.

A titre d'exemple non limitatif, dans l'illustration de la figure 3C, seule la station SCQ1 est sélectionnée dans l'étape D car il existe un unique canal quantique CQ1 disponible dans le satellite Sat et la station SCQ1 a émis une requête d'établissement de canal quantique (RCQ) que l'unité de traitement à classée avec une priorité plus élevée que celle émise par la station SCQ2.

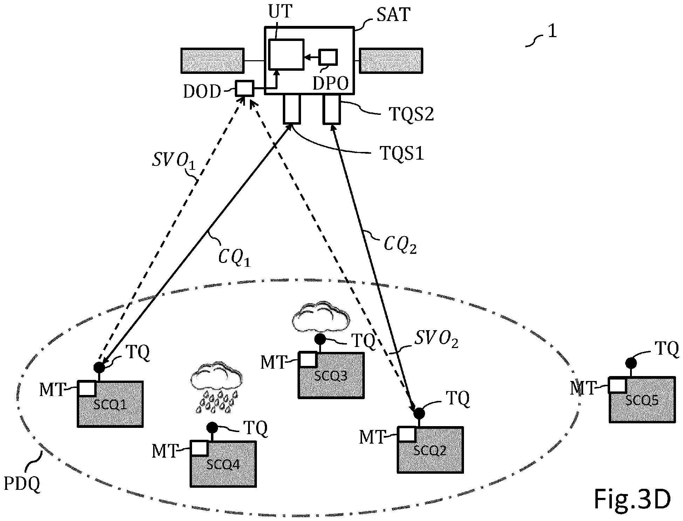

Alternativement, selon un autre mode de réalisation illustré dans la figure 3D, il existe deux canaux quantiques CQ1, CQ2 disponibles dans le satellite Sat. Aussi, les deux stations SCQ1 et SCQ2 sont sélectionnées dans l'étape D.

La méthode de la figure 3A comprend une ultime étape E consistant à échanger par le canal quantique CQ₁ établi entre le satellite Sat et la station sélectionnée SCQ1 dans l'étape D, au moins une clé secrète K1. Cette étape d'échange de clé secrète entre le satellite Sat et la station SCQ1 est effectuée selon toute méthode connue de l'homme de l'art comme par exemple le protocole Préparation et Mesure BB84. Dans le cas plus général d'un protocole de distribution de clé quantique quelconque, l'étape E consiste à établir, via le satellite Sat, un canal quantique avec la ou les stations sélectionnées. Par exemple, dans le mode de réalisation de la figure 3D où il existe deux canaux quantiques CQ1, CQ2 disponibles dans satellite Sat, le protocole d'établissement de canal quantique peut être un protocole basé sur l'intrication quantique . Ainsi l'étape E consiste à établir, via le satellite Sat, au moins une clé secrète partagée par les deux stations sélectionnées S1, S2 sous la forme d'une paire de photons intriqués via les canaux quantiques CQ1, CQ2.

L'étape F peut consister également à échanger par les canaux quantiques CQ1 et CQ2 établis entre le satellite et les deux stations sélectionnées SCQ1 et SCQ2 au moins une clé secrète K1 partagée entre les deux stations SCQ1 et SCQ2. Cette étape d'échange de clé secrète entre les deux stations SCQ1 et SCQ2 est effectuée selon toute méthode connue de l'homme de l'art, comme par exemple le protocole par intrication BBM92 (Bennett, Brassard and Mermin 1992).

De manière notable, dans la méthode de la figure 3A et l'architecture associée, la gestion de la planification est entièrement déportée sur le satellite Sat et dans les stations terrestres de communication quantique via l'émission de requêtes d'établissement de canal quantique RCQ. Le satellite acquiert de façon autonome et indépendante du centre de contrôle de mission au sol les informations nécessaires à la planification de sa mission et cela indépendamment du protocole de distribution de clé quantique. Cela constitue un changement important comparativement à l'architecture de l'art antérieur illustrée dans la figure 2 dans laquelle la prise de décision concernant la planification était prise par le centre de contrôle de mission. En évitant la multiplication des liaisons de TM/TC pour programmer la mission du satellite et les liaisons entre les stations terrestres de communication quantique et le centre de contrôle de mission, l'architecture de l'invention présente une sécurité améliorée, une simplicité accrue et un cout réduit par rapport à l'art antérieur.

Comme illustré dans la figure 3A, de manière préférentielle, les étapes de la méthode sont répétées en boucle jusqu'à ce qu'une ou plusieurs stations soient sélectionnées dans l'étape D. Plus précisément :
- l'étape A est répétée en boucle jusqu'à ce que le sous ensemble de stations terrestres de communication quantique soit déterminé en étape B
- les étapes A et B sont répétées en boucle réel jusqu'à ce que la ou les stations visibles soient identifiées dans l'étape C,
- les étapes A, B et C sont répétées en en boucle jusqu'à ce que la ou les stations sélectionnées soient sélectionnées dans l'étape D.

Après l'établissement de canal quantique dans l'étape E, l'unité de traitement répète les étapes de la méthode de l'invention jusqu'à ce qu'une ou plusieurs stations soient à nouveau sélectionnées dans l'étape D.

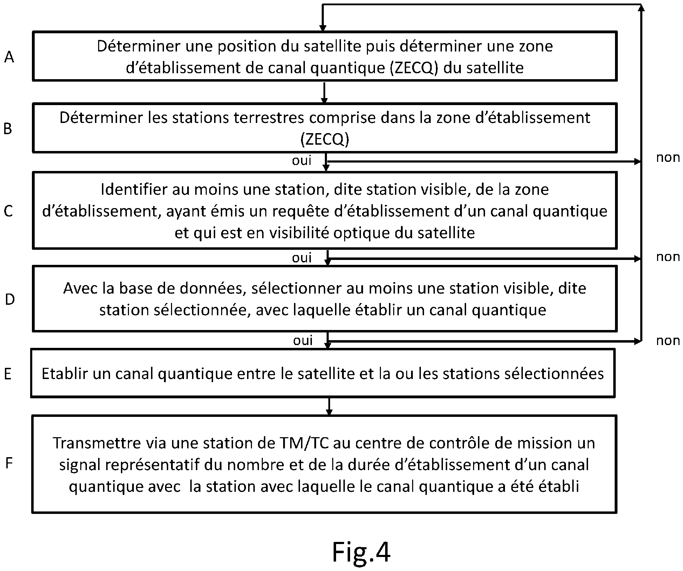

La figure 4 illustre schématiquement les étapes d'un mode de réalisation de la méthode de la figure 3A. Dans ce mode de réalisation la méthode comprend une étape ultérieure F consistant à transmettre via une station de TM/TC au centre de contrôle de mission un signal représentatif du nombre et de la durée d'établissement d'un canal quantique avec la station terrestre avec laquelle le canal quantique a été établi. Plus généralement, le signal est représentatif du volume de données échangées ou distribuées par canal quantique et de la station de communication avec laquelle chaque canal a été établi.

. Ainsi, le centre de contrôle de mission peut mettre à jour sa base de données et adapter les consignes spécifiques liées aux stations transmises au satellite. De manière préférentielle, ce signal est transmis par un canal de télécommande-télémesure (TM/TC) du satellite afin de minimiser le nombre de canaux utilisables par le satellite.

Comme évoqué plus haut, l'architecture de l'invention permet de déporter la gestion de la planification sur le satellite Sat et dans les stations terrestres de communication quantique SCQ1-SCQ5. Aussi, l'invention porte aussi sur une méthode d'émission de requête d'établissement de canal quantique RCQ.

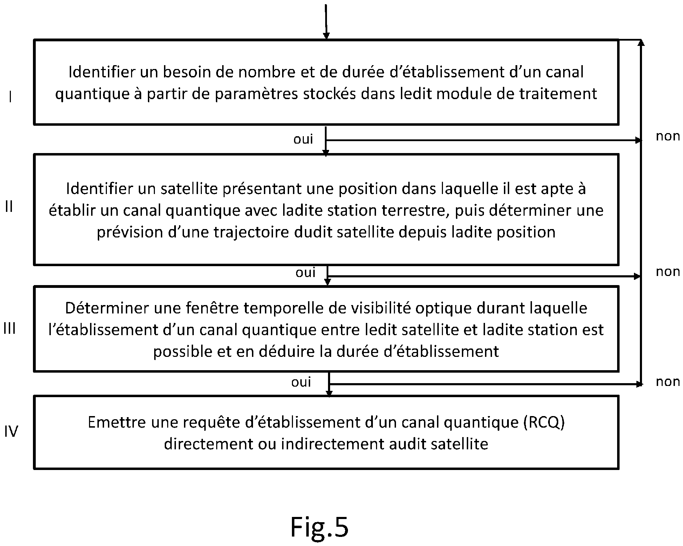

Les étapes de cette méthode sont illustrées dans la figure 5 et sont mises en oeuvre par un module de traitement MT de chaque station terrestre de communication quantique SCQ1-SCQ5. Le module de traitement MT est en outre adapté pour recevoir ou déterminer des données météorologiques locales. Ces données sont des relevés météorologiques (c'est-à-dire des mesures physiques et des paramètres météorologiques instantanés) et des prévisions météorologiques. Pour cela, la station comprend par exemple des capteurs météorologiques et/ou est reliée à un prestataire de service météorologique qui est apte à lui transmettre des données météorologiques locales.

Le module de traitement MT de chaque station terrestre de communication quantique est équipé d'un module de propagation d'orbite MPO apte à déterminer les positions ou éphémérides du ou des satellites à moyen terme (semaines ou mois). Le module de propagation d'orbite MPO est initialisé périodiquement par des données d'orbitographie du ou des satellites. Ces données d'orbitographie sont fournies par le centre de contrôle de mission via la liaison qui relie le centre de contrôle de mission et les stations terrestres de communication quantique. Alternativement, ces données d'orbitographie peuvent être fournies sous forme de TLE (Two-Line Elements) par un prestataire de service spécialisé ou par le NORAD par exemple.

Dans une première étape I de la méthode de la figure 5, le module de traitement MT est configuré pour identifier un besoin en nombre et durée d'établissement d'un canal quantique. Cette identification est effectuée à partir de paramètres stockés dans le module de traitement qui comprennent par exemple : un accord préalable de fréquence et de durée d'établissement de canal quantique de la station, un stock de clés secrètes disponibles dans la station et un recueil chronologique du nombre et des durées d'établissement de canal quantique effectuée par la station. Par « stock de clés secrètes disponibles », on entend le volume de clés secrètes précédemment échangées avec la station et qui n'a pas encore été utilisé pour sécuriser une communication.

Par exemple, lorsque le module de traitement MT identifie que le stock de clé secrètes est faible ou nul, le module de traitement identifie alors un besoin d'établissement de canal quantique.

Selon un autre exemple, l'identification d'un besoin d'établissement de canal quantique est effectuée uniquement lorsque le stock de clé secrètes est faible ou nul et que l'accord préalable de fréquence et de durée d'établissement de canal quantique prévoit un nombre et des durées d'établissement de canal quantique qui n'ont pas été effectués à ce jour.

Alternativement, lorsque le module de traitement MT identifie que le stock de clé secrètes est faible ou nul mais que l'accord préalable de fréquence et de durée d'établissement de canal quantique ne prévoit pas d'établissement de canal quantique ultérieur, le module de traitement MT n'identifie pas de besoin d'établissement de canal quantique.

De manière préférentielle, cette identification est aussi basée sur des données prévisionnelles météorologiques long termes locales (par exemple sur une semaine). Par exemple, lorsque les prévisions météorologiques long termes locales prévoient une couverture nuageuse importante de longue durée, le module de traitement MT n'identifie pas de besoin d'établissement de canal quantique. En effet, dans ce cas-là, la probabilité de réussir à établir un canal quantique est faible.

Si un besoin est identifié dans l'étape I, dans une deuxième étape II, le module MT est configuré pour identifier un satellite Sat présentant une position dans laquelle il est apte à établir un canal quantique avec la station. Pour ce faire, le module MT utilise les prévisions des positions (éphémérides) des satellites qui sont fournies par le module de propagation d'orbite MPO et la position géographique de la station pour calculer les dates des futures périodes de visibilité des satellites, c'est-à-dire les dates auxquelles la station rentrera dans la zone d'établissement d'un canal quantique ZECQ des satellites.

Après l'étape II, la méthode comprend une étape III qui consiste à déterminer s'il existe une fenêtre temporelle de visibilité optique durant laquelle l'établissement du canal quantique entre le satellite identifié et la station terrestre de communication quantique est possible. Cette détermination est effectuée à partir des données météorologiques et à partir de la prévision des positions (éphémérides) du satellite calculée en étape II. Dans l'étape III, les données météorologiques pertinentes prises en compte comprennent les relevés météorologiques locaux et des prévisions météorologiques locales pour une durée comprise entre 1 minute et 15 minutes par exemple. La durée de la fenêtre temporelle qui est déterminée dans l'étape III dépend de plusieurs paramètres dont en autres, l'altitude du satellite, l'élévation minimale du télescope du terminal quantique de la station pour viser le satellite, la durée de la phase d'acquisition et de pointage mutuel des deux télescopes effectué par le système de pointage et de poursuite. Par exemple, pour un satellite LEO à 1262 km d'altitude (13 orbites par jour) et une élévation minimale de 30°, la durée maximale de survol d'une station (fenêtre temporelle de visibilité optique) est de 8 minutes. Pour un satellite MEO à 8068 km d'altitude (5 orbites par jour) et une élévation minimale de 30°, la durée maximale atteint 1 heure.

Préférentiellement, le module de traitement ne détermine l'existence d'une telle fenêtre temporelle que lorsque la probabilité d'établir un canal quantique - compte tenu des données météorologiques et de la prévision de la trajectoire- est très élevée. Cette probabilité est supérieure à une probabilité fixée dans l'accord préalable de niveau de service. Cette probabilité pourra être modifiée par le centre de contrôle de mission via la liaison reliant la station au centre de contrôle de mission, en fonction de la gestion du réseau par le gestionnaire du système.

Enfin, la méthode de la figure 5 comprend une ultime étape IV consistant à émettre une requête d'établissement du canal quantique (RCQ) transmise directement ou indirectement au satellite Sat identifié dans l'étape II.

Comme évoqué précédemment, selon un mode de réalisation, cette requête est transmise indirectement au satellite Sat via le centre de contrôle de mission (avec la signature de la station l'ayant émise afin de pouvoir l'identifier). Dans ce mode de réalisation, la requête sera stockée dans l'unité de traitement UT du satellite avant la mise en oeuvre de l'étape C de la méthode de la figure 3A.

Selon un autre mode de réalisation, compatible avec le précédent mode de réalisation évoqué, la requête d'établissement du canal quantique (RCQ) est transmise directement au satellite Sat, par exemple sous la forme du signal laser de visibilité optique SVO émis par la station.

Comparativement à l'architecture de l'art antérieur, la méthode de la figure 5 mise en oeuvre par la station terrestre de communication quantique selon l'invention présente l'avantage de ne pas requérir l'acquisition de données extérieures à la station. La station ne transmet sa requête d'établissement du canal quantique (RCQ) que si les conditions pour établir le canal quantique sont réalisées à court terme. La station transmet sa requête si les prévisions locales de ciel clair dans la fenêtre temporelle sont hautement probables (97% ou plus par exemple). Le satellite attribue une ressource pour établir un canal quantique avec une station terrestre de communication quantique avec un taux de succès très haut (99% par exemple).

Les étapes de la méthode de la figure 5 sont préférentiellement répétées en boucle. Plus précisément, l'étape I est répétée en boucle jusqu'à ce qu'un satellite soit identifié dans l'étape II, et les étapes I et Il sont répétées en boucle jusqu'à ce qu'une fenêtre temporelle soit identifiée dans l'étape III.

## Revendications

1. Méthode d'établissement d'un canal de communication quantique (CQ₁, CQ₂) par un satellite (Sat), le satellite comprenant une unité de traitement (UT) dans laquelle sont stockées des données associées à une pluralité de stations terrestres de communication quantique (SCQ1-SCQ5) comprenant une position desdites stations terrestres de communication quantique (SCQ1-SCQ5), ladite méthode comprenant les étapes suivantes mises en oeuvre par l'unité de traitement :
A. Déterminer une position du satellite (Sat) puis déterminer une zone d'établissement de canal quantique du satellite (ZECQ) à partir de ladite position du satellite,
B. A partir de ladite position desdites stations terrestres de communication quantique, déterminer un sous ensemble de stations terrestres de communication quantique (SCQ1-SCQ4) formé par au moins une des stations terrestres de communication quantique comprise dans ladite zone d'établissement de canal quantique (ZECQ),
C. Identifier au moins une des stations terrestres de communication quantique, dite station visible (SCQ1 , SCQ2) :
- comprise dans ledit sous ensemble,
- ayant émis une requête d'établissement de canal quantique (RCQ), et
- qui est en visibilité optique du satellite,
D. Avec lesdites données, sélectionner au moins une station visible, dite station sélectionnée (SCQ1), avec laquelle établir un canal quantique, puis
E. Etablir un canal quantique (CQ₁, CQ₂) entre ledit satellite (Sat) et la ou les stations sélectionnées.

2. Méthode selon la revendication 1, dans laquelle, lorsqu'il existe un nombre de station(s) visible(s) supérieur à un nombre *N* >_ 1 de canaux quantiques disponibles sur le satellite (Sat), l'étape D comprend une sous étape de classement par priorité desdites requêtes d'établissement d'un canal quantique en fonction d'informations comprises dans lesdites données, lesdites informations étant choisies parmi la liste suivante : un recueil chronologique des établissements d'un canal quantique précédemment établies avec les stations (SCQ1-SCQ5), un accord préalable d'établissement d'un canal quantique avec les stations (SCQ1-SCQ5) et des consignes émises par un centre de contrôle de mission, ladite sélection de la ou des stations sélectionnées consistant à choisir la ou les N stations visibles ayant émis une requête d'établissement d'un canal quantique (RCQ) présentant une priorité classée parmi les N premières.

3. Méthode selon la revendication précédente, dans laquelle lesdites informations comprennent une durée de visibilité optique des stations visibles calculée par l'unité de traitement à partir de ladite position desdites stations, de ladite position du satellite et d'une prévision d'une trajectoire du satellite.

4. Méthode selon l'une quelconque des revendications précédentes, dans laquelle l'étape C comprend :
- détecter un signal laser dit signal de visibilité optique (SVO) émis par au moins une station terrestre de communication quantique (SCQ1, SCQ2) comprise dans ledit sous ensemble, puis
- identifier cette ou ces stations terrestre(s) de communication quantique comme station(s) visible(s).

5. Méthode selon l'une quelconque des revendications précédentes, dans laquelle préalablement à l'étape C, une des stations terrestres de communication quantique transmet une requête d'établissement d'un canal quantique (RCQ) vers un centre de contrôle de mission puis ledit centre de contrôle de mission transmet ladite requête au satellite, et dans laquelle lesdites données comprennent ladite requête, l'étape C comprenant l'identification de cette station terrestre de communication quantique comme station visible lorsqu'elle est en visibilité optique du satellite.

6. Méthode selon l'une quelconque des revendications précédentes, comprenant une étape ultérieure F consistant à transmettre à un centre de contrôle de mission, par un canal de télécommande-télémesure du satellite, un signal représentatif du nombre et des durées d'établissement d'un canal quantique et représentatif de la station terrestre de communication quantique avec laquelle chaque canal quantique a été établi.

7. Méthode selon l'une quelconque des revendications précédentes, dans laquelle l'étape A est répétée jusqu'à ce que ledit sous ensemble de stations terrestres de communication quantique (SCQ1-SCQ4) soit déterminé en étape B, et dans laquelle, les étapes A et B sont répétées jusqu'à ce que la ou les stations visibles soient identifiées dans l'étape C, et dans laquelle, les étapes A, B et C sont répétées jusqu'à ce que la ou les stations sélectionnées soient sélectionnées dans l'étape D.

8. Méthode selon l'une quelconque des revendications précédentes, dans laquelle l'étape E consiste à échanger, par canal quantique (CQ₁, CQ₂) via ledit satellite (Sat), au moins une clé secrète (K₁, K₂) avec la ou les stations sélectionnées.

9. Méthode selon l'une des revendications 1 à 7, dans laquelle l'étape E consiste à établir, via ledit satellite (Sat), au moins une clé secrète partagée par au moins deux stations sélectionnées.

10. Méthode d'émission de requête d'établissement d'un canal quantique (RCQ) mise en oeuvre par un module de traitement (MT) d'une station terrestre de communication quantique comprenant un terminal quantique (TQ) apte à établir un canal quantique avec le satellite, ladite méthode comprenant les étapes suivantes :
I. Identifier un besoin d'établissement d'un canal quantique à partir de paramètres stockés dans ledit module de traitement, lesdits paramètres comprenant un accord préalable d'établissement d'un canal quantique à ladite station terrestre de communication quantique, un recueil chronologique du nombre et durées d'établissement d'un canal quantique précédemment établie avec la station et un nombre et durées d'établissement de canal quantique attribué à ladite station,
II. Si un besoin est identifié, identifier un satellite présentant une position dans laquelle il est apte à établir un canal quantique avec ladite station terrestre de communication quantique, puis déterminer une prévision d'une trajectoire dudit satellite depuis ladite position,
III. A partir de données météorologiques et à partir de ladite prévision de la trajectoire, déterminer une fenêtre temporelle de visibilité optique durant laquelle un d'établissement d'un canal quantique entre ledit satellite et ladite station est possible,
IV. Emettre une requête d'établissement d'un canal quantique (RCQ) transmise directement ou indirectement audit satellite.

11. Méthode selon la revendication précédente, dans laquelle la requête de d'établissement d'un canal quantique (RCQ) est transmise directement audit satellite, ladite requête étant alors un signal laser dit signal de visibilité optique (SVO) émis par ladite station.

12. Méthode selon l'une quelconque des revendications 10 à 11, dans laquelle les données météorologiques comprennent des relevés météorologiques locaux à la station terrestre de communication quantique et des prévisions météorologiques locales à la station terrestre de communication quantique pour une durée comprise entre 1 minute et 15 minutes.

13. Satellite apte à établir un canal quantique (CQ₁, CQ₂), ledit satellite comprenant :
- au moins un terminal quantique de satellite (TQS1, TQS2) adapté pour établir un canal optique avec une station terrestre de communication quantique,
- un déterminateur et propagateur d'orbite (DPO) adapté pour déterminer une position du satellite (Sat),
- une unité de traitement (UT) dans laquelle sont stockées des données associées à une pluralité de stations terrestre de communication quantique (SCQ1-SCQ5), lesdites données comprenant une position desdites stations (SCQ1-SCQ5), ladite unité de traitement étant reliée au déterminateur et propagateur d'orbite (DPO) et adaptée pour mettre en oeuvre les étapes suivantes :
A. déterminer une zone d'établissement de canal quantique du satellite (ZECQ) à partir de ladite position du satellite déterminée par le déterminateur et propagateur d'orbite (DPO),
B. à partir de ladite position desdites stations, déterminer un sous ensemble de stations terrestre de communication quantique (SCQ1-SCQ4) formé par au moins une des stations terrestre de communication quantique comprise dans ladite zone d'établissement de canal quantique du satellite (ZECQ),
C. Identifier au moins une station terrestre de communication quantique, dite station visible (SCQ1, SCQ2) :
- comprise dans ledit sous ensemble,
- ayant émis une requête d'établissement de canal quantique (RCQ), et
- qui est en visibilité optique du satellite,
D. à partir desdites données, sélectionner au moins une station visible, dite station sélectionnée (SCQ1), avec laquelle établir un canal quantique, puis
E. établir un canal quantique (CQ1) entre ledit satellite et la ou les stations sélectionnées au moyen d'un terminal quantique de satellite (TQS1, TQS2).

14. Satellite selon la revendication précédente comprenant un dispositif optique de détection (DOD) relié à l'unité de traitement, et adapté pour que l'étape C comprenne les sous étapes suivantes :
- détecter, par ledit dispositif optique de détection (DOD), un signal laser dit signal de visibilité optique (SVO₁, SVO₂) émis par au moins une station terrestre de communication quantique (SCQ1, SCQ2) comprise dans ledit sous ensemble, puis
- identifier cette ou ces stations terrestres de communication quantique comme station(s) visible(s).

15. Station terrestre de communication (SCQ1) comprenant :
- un terminal quantique (TQ) apte à établir un canal quantique avec le satellite,
- un module de propagation d'orbite (DPO) adapté à déterminer les positions et les trajectoires du ou des satellites à partir de données d'orbitographie du ou des satellites,
- un module de traitement (MT) adapté pour recevoir ou déterminer des données météorologiques locales et adapté pour mettre en oeuvre les étapes suivantes :
I. Identifier un besoin d'établissement de canal quantique à partir de paramètres stockés dans ledit module de traitement, lesdits paramètres comprenant un accord préalable d'établissement d'un canal quantique avec ladite station et un recueil chronologique du nombre et des durées d'établissement d'un canal quantique avec ladite station,
II. Si un besoin est identifié, identifier un satellite présentant une position dans laquelle il est apte à établir un canal quantique avec ladite station, puis déterminer une prévision d'une trajectoire dudit satellite depuis ladite position,
III. A partir desdites données météorologiques et à partir de ladite prévision de la trajectoire, déterminer une fenêtre temporelle de visibilité optique dudit satellite durant laquelle un établissement de canal quantique entre ledit satellite et ladite station de communication est possible,
IV. Emettre une requête d'établissement de canal quantique (RCQ) transmise directement ou indirectement audit satellite.

16. Station terrestre de communication selon la revendication précédente, dans laquelle la requête d'établissement de canal quantique (RCQ) est transmise directement audit satellite, ladite requête étant alors un signal laser dit signal de visibilité optique (SVO) émis par ledit terminal quantique (TQ).

17. Système (1) de communication comprenant le satellite selon la revendication 13 ou 14 et comprenant la station terrestre de communication quantique selon la revendication 15 ou 16 adaptée pour que ladite requête d'établissement de canal quantique soit transmise audit satellite, ledit satellite étant alors adapté pour échanger par le canal quantique établi (CQ1) au moins une clé secrète avec la station terrestre de communication quantique.

18. Système (1) de communication comprenant le satellite selon la revendication 13 ou 14 et comprenant au moins deux stations terrestres de communication quantique (SCQ1, SCQ2) selon la revendication 15 ou 16 adaptée pour que chaque requête d'établissement de canal quantique soit transmise audit satellite, ledit satellite étant alors adapté pour générer par les canaux quantiques (CQ₁, CQ₂), au moins une clé secrète partagée par les deux stations terrestres de communication quantique (SCQ1, SCQ2).
